# EUROPEAN PATENT APPLICATION

(11) **EP 4 759 737 A1**
(43) Date of publication of application: **17.06.2026**
(21) Application number: 24852143.7
(22) Date of filing: 26.07.2024
(51) Int. Cl.: B65B 35/38, B65G 47/91, B65G 47/90

(54) **TUBE CONVEYING DEVICE**

(30) Priority: 10.08.2023 KR 20230104962
(71) Applicant: Seegene, Inc., Seoul 05548 (KR)
(72) Inventor: JEONG, Won Seok, Seoul 08719 (KR); LIM, Hyun Jin, Seoul 06927 (KR); HAN, Yoo Jun, Anyang-si, Gyeonggi-do 14044 (KR)
(74) Representative: Beck & Rössig European Patent Attorneys
(86) International application number: PCT/KR2024/010895
(87) International publication number: WO 2025/033787

(57) **Abstract**

Provided is a tube conveying device for conveying tubes located at preset positions among a plurality of tubes in a storage part in which the plurality of tubes are arranged. The tube conveying device may comprise: a body; a suction structure including suction members that are located on the bottom surface of the body and suction air so as to maintain contact with the upper surface of the tube; and an elastic structure including pusher blocks that protrude from the bottom surface of the body and provide an elastic force against the upper surface of the tube in the direction from the body to the tube, wherein at least one of the pusher blocks is arranged on the bottom surface of the body so as to be located between the suction members.

## Description

### TECHNICAL FIELD

Embodiments relate generally to a tube transferring device. More particularly, embodiments of the present inventive concept relate to a tube transferring device including suction members.

### BACKGROUND ART

In an automated production system, tubes produced in a state of a complete product may be arranged in a storage, and a tube transferring device may transfer tubes positioned at predetermined positions among the tubes arranged in the storage. The tubes transferred through the tube transferring device may be provided in a packaging box in a subsequent process, and the packaging box including the tubes may be packed by a packing robot.

For example, in the storage, tubes may be arranged in 10 rows and 10 columns, and in order to provide a relatively large number of tubes in a limited space, intervals where the tubes are spaced apart from each other may be relatively small. The tube transferring device may include suction members capable of sucking air, and after sucking air through the suction members, the tube transferring device may transfer the tubes in a state in which the tubes are in contact with the suction members. Here, the suction members may be positioned to be spaced apart from each other so that the tube transferring device transfers tubes positioned at odd-numbered rows of each column or tubes positioned at even-numbered rows of each column. In other words, when the tube transferring device transfers tubes positioned at odd-numbered rows in a first column, tubes positioned at even-numbered rows in the first column may remain in the storage.

Meanwhile, each of the tubes may include a body and a cap. The cap may be coupled to the body, and a solution contained in the body may be sealed. In a step of manufacturing the cap, a burr may be generated on an outer surface of the cap. Here, the term "burr" refers to a thin fin-shaped surplus portion generated on an outer surface of an article when the surface of the article is not cleanly processed during a manufacturing step of the article made of metal or plastic material.

In a step where the tube transferring device lift the tubes positioned at odd-numbered rows in the first column of the storage by sucking the air after the tube transferring device contacts the tubes positioned at odd-numbered rows in the first column of the storage and the suction members, respectively, in order to transfer the tubes positioned at odd-numbered rows in the first column of the storage, there is a problem in that, due to the burrs, tubes positioned adjacent to the tubes positioned at odd-numbered rows in the first column of the storage are lifted together with the tubes positioned at odd-numbered rows in the first column of the storage.

### DETAILED DESCRIPTION OF THE INVENTION

### TECHNICAL PROBLEM

An object of a present invention provides a tube transferring device.

However, the present invention is not limited to the object described above, and may be expanded in various ways without departing from the spirit and scope of the present invention.

### SOLUTION TO PROBLEM

In order to achieve the object of the present invention described above, in a tube transferring device, which transfers tubes positioned at predetermined positions among tubes in a storage where a plurality of tubes are arranged, according to exemplary embodiments of the present invention, the tube transferring device includes a body, a suction structure, and an elastic structure. The suction structure includes suction members positioned on a lower surface of the body, and the suction member is configured to maintain contact with an upper surface of the tube by sucking air. The elastic structure includes pusher blocks protruded from a lower surface of the body, and provides elastic force to an upper surface of the tube in a direction from the body to the tube. At least one pusher block is positioned between the suction members on the lower surface of the body.

In exemplary embodiments, the suction members and the pusher blocks may be alternately arranged along a first direction.

In exemplary embodiments, a distance between adjacent suction members among the suction members may be substantially the same as a distance between adjacent pusher blocks among the pusher blocks.

In exemplary embodiments, when the tubes positioned in the predetermined positions may be in contact with the suction members in the storage where the tubes are arranged, each of the pusher blocks provides elastic force to each of the tubes adjacent to the tubes contacted with the suction members, while each of the pusher blocks is in contact with each of the tubes adjacent to the tubes contacted with the suction members.

In exemplary embodiments, a length where each of the pusher blocks is protruded from the lower surface of the body may be greater than a length where each of the suction members is protruded from the lower surface of the body.

In exemplary embodiments, the elastic structure may further include a first side pusher block extending in a first direction and spaced apart from the suction members and the pusher blocks on the lower surface of the body. The first side pusher block may face one side of each of the suction members and the pusher blocks, and may have a bar shape.

In exemplary embodiments, the elastic structure may further include a second side pusher block extending in the first direction and spaced apart from the suction members and the pusher blocks on the lower surface of the body. The second side pusher block may face other side of each of the suction members and the pusher blocks, and may have a bar shape.

In exemplary embodiments, the first side pusher block may be in parallel to the second side pusher block, and the suction members and the pusher blocks may be positioned between the first and second side pusher blocks. A length where each of the pusher blocks is protruded from the lower surface of the body may be substantially the same as a length where each of the first and second side pusher blocks is protruded from the lower surface of the body.

In exemplary embodiments, the tubes may be arranged along column and row directions in the storage where the tubes are arranged, and the suction members and the pusher blocks may correspond to tubes positioned in the same column among the tubes. The first and second side pusher blocks may correspond to tubes positioned at columns adjacent to the tubes corresponding to the suction members and the pusher blocks among the tubes.

In exemplary embodiments, the tubes positioned in the same column may be in contact with the suction members and the pusher blocks in the storage where the tubes are arranged. Each of the pusher blocks may provide elastic force to each of remaining tubes except for the tubes contacted with the suction members among the tubes positioned in the same column. Each of the first and second side pusher blocks may provide elastic force to each of the tubes positioned at columns adjacent to the tubes corresponding to the suction members and the pusher blocks among the tubes.

In exemplary embodiments, the suction structure may include first to n-th suction members arranged along a first direction, where n is an integer more than 3. The elastic structure may include first to m-th pusher blocks arranged along the first direction, where m is an integer more than 2. A j-th pusher block among the first to m-th pusher blocks may be positioned between k-th and (k+1)-th suction members among the first to n-th suction members, where k is an integer between 1 and n, and j is an integer between 1 and m. A (j+1)-th pusher block may be positioned between (k+1)-th and (k+2)-th suction members.

In exemplary embodiments, the elastic structure may further include first and second side pusher blocks extending along the first direction in both lateral portions of the first to n-th suction members and the first to m-th pusher blocks. The first and second side pusher blocks may be opposite to each other.

In exemplary embodiments, the tubes in the storage are arranged in A rows and B columns, where each of A and B is integer more than 3. When the first to n-th suction members are in contact with tubes positioned at a g-column, where g is an integer between 1 and a, the first to m-th pusher blocks may provide elastic force to each of tubes, which is not in contact with the first to n-th suction members, among the tubes positioned at the g-column, the first side pusher block may provide elastic force to each of tubes positioned at a (g-1)-column, and the second side pusher block may provide elastic force to each of tube positioned at a (g+1)-column.

In exemplary embodiments, the device may further include a gripper gripping or releasing the tube contacted with each of the suction members.

In exemplary embodiments, the device may further include a fix member positioned on the body, and the fix member may fix the body. The gripper may include a first gripper and a second gripper. The first gripper may be positioned in one side of the fix member, and may be hinge-connected to a first pivot axis extending in a first direction. The second gripper may be positioned in other side of the fix member, and may be hinge-connected to a second pivot axis extending in the first direction.

In exemplary embodiments, a first distal end of the first gripper may be adjacent to the first pivot axis. A second distal end of the first gripper may extend in the first direction, and may include first recessed portions. A number of the first recessed portions may be the same as a number of the suction members. A first distal end of the second gripper may be adjacent to the second pivot axis. A second distal end of the second gripper may extend in the first direction, and may include second recessed portions. A number of the second recessed portions may be the same as a number of the suction members.

In exemplary embodiments, the first and second grippers may be parallel with respect to the lower surface of the body through the first and second pivot axes so as to release the tubes contacted with the suction members, and the second distal end of each of the first and second grippers may be adjacent to each other so as to grip the tubes contacted with the suction members.

In exemplary embodiments, when the second distal end of each of the first and second grippers is adjacent to each other, the tubes may be positioned in the first and second recessed portions.

In exemplary embodiments, the device may further include a controller configured to control a suction of air through the suction members and control the gripper so that the gripper grips or releases the tubes.

In order to achieve the object of the present invention described above, in a tube transferring device, which transfers tubes positioned at predetermined positions among tubes in a storage where a plurality of tubes are arranged, according to exemplary embodiments of the present invention, the tube transferring device includes a body, a suction structure, an elastic structure, a gripper, and a controller. The suction structure includes suction members positioned on a lower surface of the body, and is configured to maintain contact with an upper surface of the tube by sucking air. The elastic structure includes pusher blocks protruded from a lower surface of the body and first and second side pusher blocks extending in a first direction by spacing apart from the suction members and the pusher blocks on the lower surface of the body. At least one pusher block is positioned between the suction members on the lower surface of the body, and the first and second side pusher blocks are positioned in both lateral portions of each of the suction members and the pusher blocks. The first and second side pusher blocks have a bar shape, and the elastic structure provide elastic force to an upper surface of the tube in a direction from the body to the tube. The gripper grips or releases the tube contacted with each of the suction members. The controller is configured to control the suction members so that the suction members suck air or do not suck air and control the gripper so that the gripper grips or releases the tubes.

In order to achieve the object of the present invention described above, in a tube transferring device, which transfers tubes positioned at predetermined positions among tubes in a storage where a plurality of tubes are arranged, according to exemplary embodiments of the present invention, the tube transferring device includes a body, a suction structure, and a gripper. The suction structure includes suction members positioned on a lower surface of the body, and the suction member is configured to maintain contact with an upper surface of the tube by sucking air. The gripper grips or releases the tube contacted with each of the suction members.

### ADVANTAGEOUS EFFECTS OF INVENTION

As the tube transferring device according to exemplary embodiments of the present invention includes the elastic structure, during a step of lifting the tubes positioned at predetermined positions by the tube transferring device, tubes positioned adjacent to the tubes at the predetermined positions may not be lifted together with the tubes at the predetermined positions, even when burrs are formed on the tube. Accordingly, since the tube transferring device accurately transfers only the tubes positioned at the predetermined positions, loss of the tube may be prevented.

In addition, since the tubes positioned adjacent to the tubes at the predetermined positions are not lifted together with the tubes at the predetermined positions, the gripper grips only the tubes positioned at the predetermined positions, such that malfunction of the gripper may not occur.

However, the effect of the present invention is not limited to the effects described above, and may be expanded in various ways without departing from the spirit and scope of the present invention.

### BRIEF DESCRIPTION OF THE DRAWINGS

FIGS. 1 and 2 are perspective views illustrating a tube transferring device according to exemplary embodiments of the present invention.
FIG. 3 is a block diagram illustrating a controller included in the tube transferring device of FIG. 1.
FIG. 4 is a diagram for describing a tube arranged in a storage of FIG. 1.
FIG. 5 is a rear view illustrating the tube transferring device of FIG. 1.
FIGS. 6 and 7 are diagrams for describing a suction structure and an elastic structure included in the tube transferring device of FIG. 5.
FIG. 8 is a perspective view for describing a gripper included in the tube transferring device of FIG. 1.
FIGS. 9 and 10 are diagrams for describing a state where the suction structure and the elastic structure of FIGS. 6 and 7 are in contact with tubes arranged in a storge.
FIG. 11 is a flow chart illustrating a method of transferring a tube of a tube transferring device according to exemplary embodiments of the present invention.
FIG. 12 is a diagram for describing the method of transferring the tube of the tube transferring device of FIG. 11.

### MODE FOR THE INVENTION

Hereinafter, a tube transferring device according to exemplary embodiments of the present invention will be described in detail with reference to the accompanying drawings. In the accompanying drawings, the same or similar reference numerals refer to the same or similar elements.

In the present specification, specific structural and functional descriptions are merely exemplified for the purpose of explaining embodiments of the present invention, and the embodiments of the present invention may be implemented in various forms and are not construed as being limited to the embodiments described in the present specification, but are understood to include all modifications, equivalents, and substitutes included in the spirit and technical scope of the present invention. When a component is described as being "connected" or "in contact with" another component, it should be understood that it may be directly connected or in contact with the other component, but at least one other component may exist in therebetween. In addition, when a component is described as being "directly connected to" or "in direct contact with" another component, it may be understood that there is no other component in between. Other expressions describing the relationship between components, such as "between" and "directly between" or "adjacent to" and "directly adjacent to", may be interpreted in the same way.

The terminology used in the present invention is for the purpose of describing embodiments only and is not intended to be limiting of the present invention. The singular expression includes the plural expression unless the context clearly indicates otherwise. In the present specification, it should be understood that the terms "comprise," "include," or "have" are intended to specify the presence of a feature, number, step, operation, component, part, or combination thereof, but do not exclude in advance the possibility of the presence or addition of one or more other features, numbers, steps, operations, components, parts, or combinations thereof. Unless otherwise defined, all terms used herein, including technical or scientific terms, have the same meaning as commonly understood by one of ordinary skill in the art to which this present invention belongs.

Terms defined in commonly used dictionaries should be interpreted as having a meaning consistent with their meaning in the context of the relevant art, and will not be interpreted in an idealized or overly formal sense unless expressly defined in the present specification.

Terms first, second, and third may be used to describe various components, but these components are not limited by the terms. The terms are used for the purpose of distinguishing one component from another. For example, without departing from the scope of the present invention, the first component may be referred to as the second or third component, and similarly, the second or third component may be referred to interchangeably.

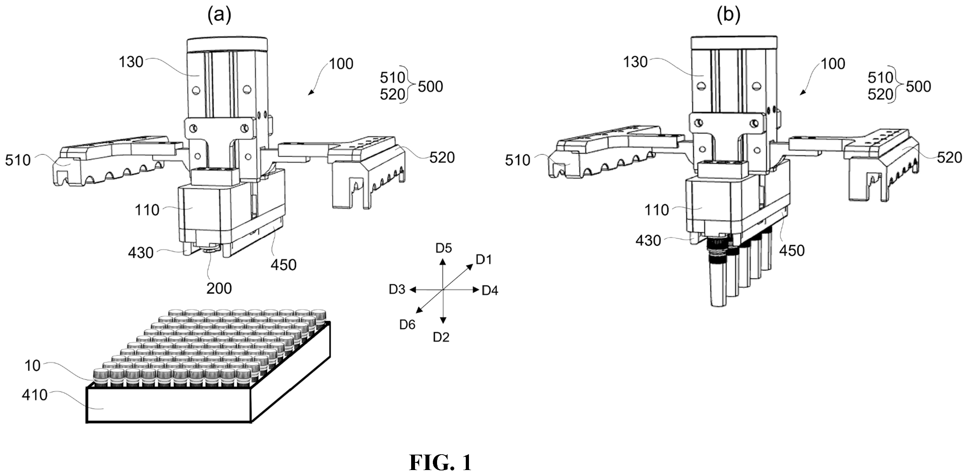

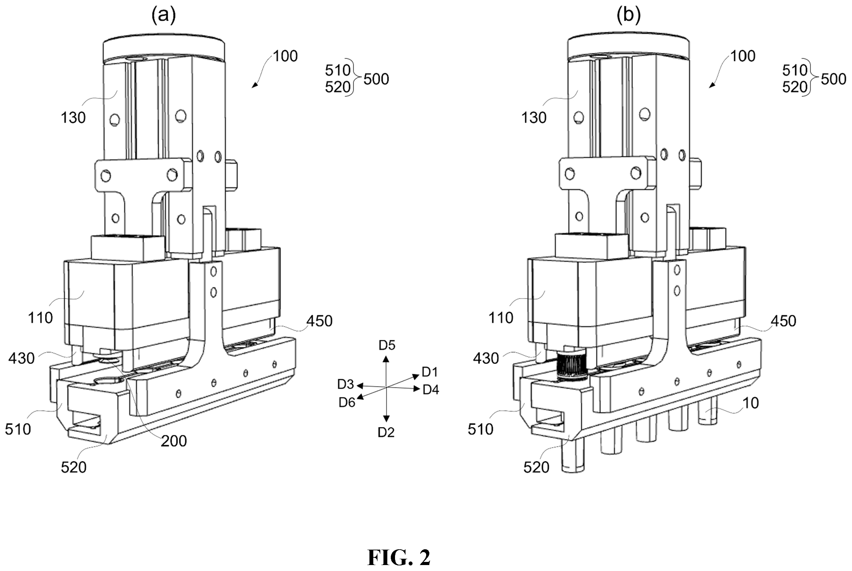

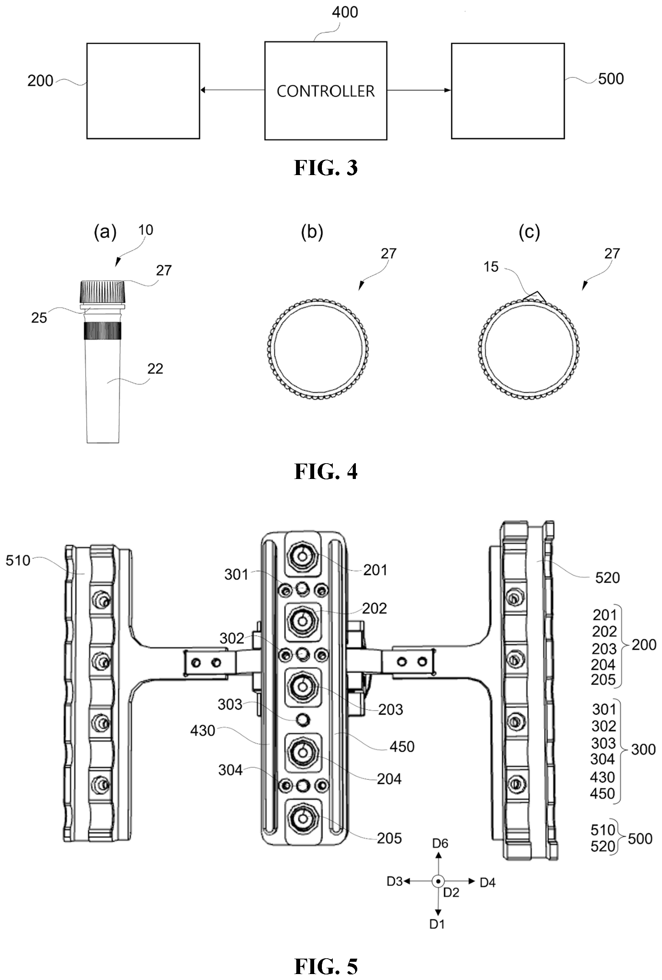

FIGS. 1 and 2 are perspective views illustrating a tube transferring device according to exemplary embodiments of the present invention, and FIG. 3 is a block diagram illustrating a controller included in the tube transferring device of FIG. 1. FIG. 4 is a diagram for describing a tube arranged in a storage of FIG. 1, and FIG. 5 is a rear view illustrating the tube transferring device of FIG. 1. For example, FIG. 1A is a perspective view illustrating a state where a tube transferring device 100 is positioned on a storage 410, and FIG. 1B is a perspective view illustrating a state where tubes 10 are lifted from the storage 410 by the tube transferring device 100. In addition, FIGS. 2A and 2B are perspective views for describing a state where a gripper of the tube transferring device 100 grips the tubes 10.

Referring to FIG. 1, 2, 3, 4, and 5, a tube transferring device 100 may include a body 110, a fix member 130, a suction structure 200, an elastic structure 300, a gripper 500, a first pivot axis 515, a second pivot axis 525, a controller 400, etc. Here, the suction structure 200 may include first, second, third, fourth, and fifth suction members 201, 202, 203, 204, and 205, and the elastic structure 300 may include first, second, third, and fourth pusher blocks 301, 302, 303, and 304 and first and second side pusher blocks 430 and 450. In addition, the gripper 500 may include a first gripper 510 and a second gripper 520.

The tube transferring device 100 may be connected to a robot arm and may move along a predetermined path. The tube transferring device 100, which is movable through the robot arm, may correspond to a transferring device implemented to provide tubes 10 to a designated position (or a predetermined position) in a designated space. Here, the designated position may correspond to positions where the tubes 10 are spaced apart from each other at predetermined intervals.

In exemplary embodiments, the tube transferring device 100 may transfer tubes 10 positioned at the predetermined positions among the tubes 10 arranged in a storage 410 in which a plurality of tubes 10 are arranged. For example, the tubes 10 may be arranged in 10 rows and 10 columns in the storage 410, and in order to provide a relatively large number of tubes 10 in a limited space, intervals where the tubes 10 are spaced apart from each other may be relatively small.

However, although it has been described that the tubes 10 are arranged in 10 rows and 10 columns in the storage 410 of the present invention, the configuration of the present invention is not limited thereto. For example, in other exemplary embodiments, the tubes 10 may be arranged in A rows and B columns in the storage 410, where each of A and B is an integer equal to or greater than 2.

As illustrated in FIG. 3, the controller 400 may control the suction structure 200 and the gripper 500. In exemplary embodiments, the controller 400 may control a suction of air through the suction structure 200. For example, the controller 400 may control the suction structure 200 so that the suction structure 200 sucks air or does not suck air. In addition, the controller 400 may control the gripper 500 so that the gripper 500 grips or releases the tubes 10. For example, the controller 400 may control the gripper 500 so that the first and second grippers 510 and 520 are positioned in parallel with respect to a ground, as illustrated in FIGS. 1A and 1B, or the controller 400 may control the gripper 500 so that the first and second grippers 510 and 520 are positioned adjacent to each other, as illustrated in FIGS. 2A and 2B. In other exemplary embodiments, the controller 400 may control an overall operation of the tube transferring device 100.

As illustrated in FIG. 4A, the tube 10 may include a container 22 and a cap 27. The container 22 may have a cylindrical shape, and a protrusion 25 may be formed on a side surface of the container 22 (e.g., a neck of the tube). In addition, the container 22 may be capped (or sealed) by the cap 27. Further, a solution in a liquid state (or a powder in a solid state) may be contained in the container 22.

As illustrated in FIGS. 4B and 4C, a burr 15 may be generated on an outer surface of the cap 27 during a step of manufacturing the cap 27. Here, the term "burr" 15 refers to a thin fin-shaped surplus portion generated on an outer surface of an article when the surface of the article is not cleanly processed during a manufacturing step of the article made of metal or plastic material. For example, FIG. 4B illustrates the cap 27 where the burr 15 is not generated, and FIG. 4C illustrates the cap 27 where the burr 15 is generated.

As illustrated in FIG. 5, the first to fifth suction members 201, 202, 203, 204, and 205, the first to fourth pusher blocks 301, 302, 303, and 304, and the first and second side pusher blocks 430 and 450 may be positioned on a lower surface of the body 110. In addition, at least one pusher block among the first to fourth pusher blocks 301, 302, 303, and 304 may be positioned between adjacent suction members among the first to fifth suction members 201, 202, 203, 204, and 205, and the first and second side pusher blocks 430 and 450 may be positioned on both lateral portions of the first to fourth pusher blocks 301, 302, 303, and 304 and the first to fifth suction members 201, 202, 203, 204, and 205.

In exemplary embodiments, the suction structure 200 may suck air to maintain contact with an upper surface of the tube 10, and the elastic structure 300 may provide elastic force to the upper surface of the tube 10 in a direction from the body 110 to the tube 10.

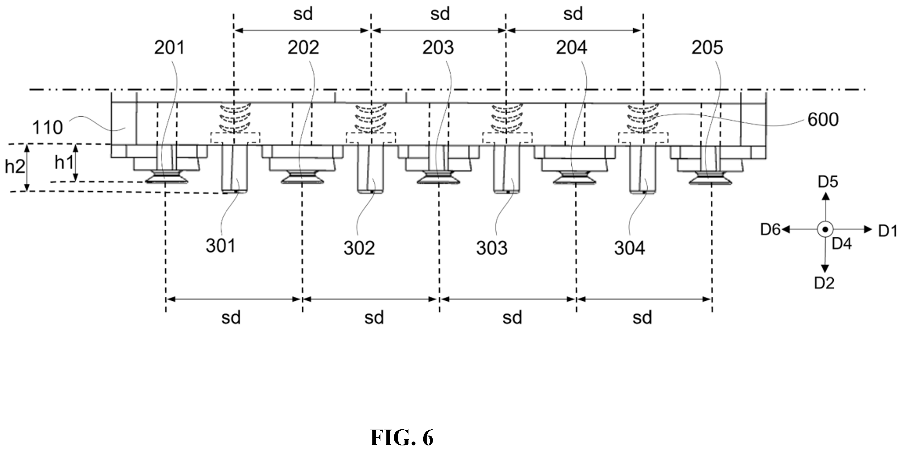

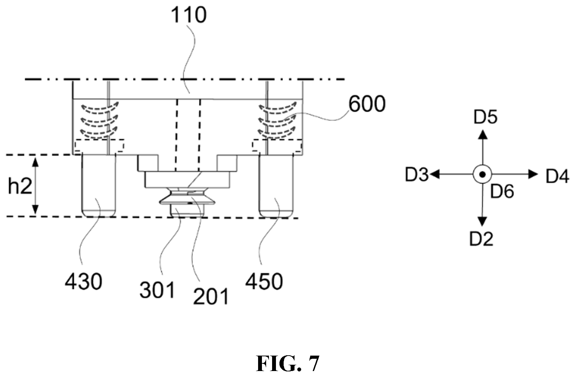

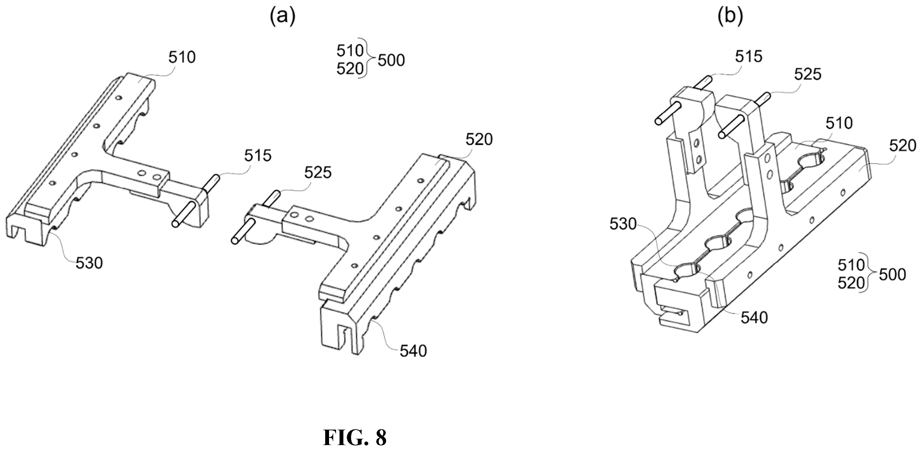

FIGS. 6 and 7 are diagrams for describing a suction structure and an elastic structure included in the tube transferring device of FIG. 5, and FIG. 8 is a perspective view for describing a gripper included in the tube transferring device of FIG. 1. For example, FIG. 8A is a perspective view illustrating a state where the first and second grippers 510 and 520 are positioned in parallel with respect to the ground, and FIG. 8B is a perspective view illustrating a state where the first and second grippers 510 and 520 are positioned adjacent to each other.

Referring to FIGS. 1, 5, 6, 7, and 8, the fix member 130 may be positioned on the body 110, and the fix member 130 may be connected to the robot arm. The gripper 500 may be connected to a side surface of the fix member 130, and as illustrated in FIGS. 1, 2, and 8, the tube transferring device 100 may have a state where the first gripper 510 and the second gripper 520 are positioned in parallel with respect to the ground (refer to FIG. 8A) and a state where the first gripper 510 and the second gripper 520 are positioned adjacent to each other (refer to FIG. 8B) through the first and second pivot axes 515 and 525. In addition, the body 110 may be connected to a lower surface of the fix member 130, and the body 110 may be fixed to the fix member 130.

The fix member 130 may include metal, alloy, metal nitride, etc. For example, the fix member 130 may include metallic materials such as gold (Au), silver (Ag), aluminum (Al), iron (Fe), zinc (Zn), lead (Nb), tungsten (W), copper (Cu), platinum (Pt), nickel (Ni), titanium (Ti), palladium (Pd), magnesium (Mg), calcium (Ca), lithium (Li), chromium (Cr), tantalum (Ta), molybdenum (Mo), scandium (Sc), neodymium (Nd), iridium (Ir), etc., alloys such as alloys containing Al, alloys containing Ag, alloys containing Cu, alloys containing Mo, etc., and metal nitrides such as aluminum nitride (AlN), tungsten nitride (WN), titanium nitride (TiN), chromium nitride (CrN), tantalum nitride (TaN), etc. In other exemplary embodiments, the fix member 130 may include plastics such as polyether ether ketone (PEEK), polyacrylether ketone (PAEK), polyether imide (PEI), polyether sulfone (PES), etc.

The body 110 may be positioned under the fix member 130. As described above, the first to fifth suction members 201, 202, 203, 204, and 205, the first to fourth pusher blocks 301, 302, 303, and 304, and the first and second side pusher blocks 430 and 450 may be mounted on a lower portion of the body 110. The body 110 may be manufactured by using metal, alloy, metal nitride, plastic, etc.

Referring again to FIGS. 5 and 6, the first to fifth suction members 201, 202, 203, 204, and 205 may be arranged on a lower surface of the body 110 to be spaced apart from each other by a first interval sd along a first direction D1. A portion of each of the first to fifth suction members 201, 202, 203, 204, and 205 may protrude from the lower surface of the body 110, and a remaining portion of each of the first to fifth suction members 201, 202, 203, 204, and 205 may be positioned inside the body 110. In other words, first openings may be formed on the lower surface of the body 110, and the portions of each of the first to fifth suction members 201, 202, 203, 204, and 205 may protrude from the lower surface of the body 110 through the first openings. Here, a length where each of the first to fifth suction members 201, 202, 203, 204, and 205 protrudes from the lower surface of the body 110 is defined as a first length h1. In addition, a passage (e.g., an opening) capable of moving air may be formed in a central portion of each of the first to fifth suction members 201, 202, 203, 204, and 205. Each of the first to fifth suction members 201, 202, 203, 204, and 205 may be manufactured by using metal, alloy, metal nitride, plastic, etc. In other exemplary embodiments, when each of the first to fifth suction members 201, 202, 203, 204, and 205 is in contact with the tube 10, a buffer member manufactured of rubber, silicone, etc. may be mounted on a lower end of each of the first to fifth suction members 201, 202, 203, 204, and 205 for impact mitigation.

The first to fourth pusher blocks 301, 302, 303, and 304 may be arranged on the lower surface of the body 110 to be spaced apart from each other by the first interval sd along the first direction D1. In other words, the first to fifth suction members 201, 202, 203, 204, and 205 and the first to fourth pusher blocks 301, 302, 303, and 304 may be alternately arranged along the first direction D1. A portion of each of the first to fourth pusher blocks 301, 302, 303, and 304 may protrude from the lower surface of the body 110, and a remaining portion of each of the first to fourth pusher blocks 301, 302, 303, and 304 may be positioned inside the body 110. In other words, second openings may be formed on the lower surface of the body 110, and the portions of each of the first to fourth pusher blocks 301, 302, 303, and 304 may protrude from the lower surface of the body 110 through the second openings. In addition, a size (e.g., a diameter) of the remaining portion of each of the first to fourth pusher blocks 301, 302, 303, and 304 may be greater than a size (e.g., a diameter) of the portion of each of the first to fourth pusher blocks 301, 302, 303, and 304. In other words, the size of the portion of each of the first to fourth pusher blocks 301, 302, 303, and 304 may be substantially the same as a size (e.g., a diameter) of the second opening, and the size of the remaining portion of each of the first to fourth pusher blocks 301, 302, 303, and 304 may be greater than the size of the second opening. Thus, since the size of the remaining portion of each of the first to fourth pusher blocks 301, 302, 303, and 304 positioned inside the body 110 is greater than the size of the second opening, separation of the first to fourth pusher blocks 301, 302, 303, and 304 from the body 110 may be prevented. Here, a length where each of the first to fourth pusher blocks 301, 302, 303, and 304 protrudes from the lower surface of the body 110 is defined as a second length h2. In exemplary embodiments, the length where each of the first to fourth pusher blocks 301, 302, 303, and 304 protrudes from the lower surface of the body 110 (i.e., the second length h2) may be greater than the length by which each of the first to fifth suction members 201, 202, 203, 204, and 205 protrudes from the lower surface of the body 110 (i.e., the first length h1). In addition, the elastic structure 300 may further include an elastic member 600, and the elastic member 600 may be in contact with an upper surface of each of the first to fourth pusher blocks 301, 302, 303, and 304 and the first and second side pusher blocks 430 and 450. The elastic member 600 may include a compression spring. For example, the compression spring may be an open-coil helical spring that provides resistance against a compressive force applied in an axial direction (e.g., a second direction D2 or a fifth direction D5).

For example, as illustrated in FIG. 1, in a storage 410 in which the tubes 10 are arranged, when the tubes 10 positioned at the predetermined positions are respectively in contact with the first to fifth suction members 201, 202, 203, 204, and 205, the first to fourth pusher blocks 301, 302, 303, and 304 may be in contact with tubes 10 positioned adjacent to the tubes 10 contacted with the first to fifth suction members 201, 202, 203, 204, and 205. In this case, since the second length h2 is greater than the first length h1, each of the first to fourth pusher blocks 301, 302, 303, and 304 may move in a direction from the tube 10 toward the body 110 (e.g., the fifth direction D5), and the elastic member 600 positioned on each of the first to fourth pusher blocks 301, 302, 303, and 304 may be compressed. As a result, each of the first to fourth pusher blocks 301, 302, 303, and 304 may provide elastic force to each of the tubes 10 contacted with each of the first to fourth pusher blocks 301, 302, 303, and 304 in a direction from the body 110 toward the tube 10 (e.g., the second direction D2). Here, the fifth direction D5 and the second direction D2 may be substantially opposite directions.

In exemplary embodiments, a distance (i.e., the first interval sd) where two adjacent suction members among the first to fifth suction members 201, 202, 203, 204, and 205 are spaced apart from each other and a distance (i.e., the first interval sd) where two adjacent pusher blocks among the first to fourth pusher blocks 301, 302, 303, and 304 are spaced apart from each other may be substantially the same.

Referring again to FIGS. 5 and 7, the first side pusher block 430 may be spaced apart from the first to fifth suction members 201, 202, 203, 204, and 205 and the first to fourth pusher blocks 301, 302, 303, and 304 in a third direction D3 and may extend in the first direction D1. The first side pusher block 430 may face one side of each of the suction structure 200 and the first to fourth pusher blocks 301, 302, 303, and 304 and may have a bar shape. A portion of the first side pusher block 430 may protrude from the lower surface of the body 110, and a remaining portion of the first side pusher block 430 may be positioned inside the body 110. In other words, a third opening may be formed on the lower surface of the body 110, and the portion of the first side pusher block 430 may protrude from the lower surface of the body 110 through the third opening. In addition, a size (e.g., a diameter) of the remaining portion of the first side pusher block 430 may be greater than a size (e.g., a diameter) of the portion of the first side pusher block 430. In other words, the size of the portion of the first side pusher block 430 may be substantially the same as a size (e.g., a diameter) of the third opening, and the size of the remaining portion of the first side pusher block 430 may be greater than the size of the third opening. Thus, since the size of the remaining portion of the first side pusher block 430 positioned inside the body 110 is greater than the size of the third opening, separation of the first side pusher block 430 from the body 110 may be prevented.

The second side pusher block 450 may be spaced apart from the first to fifth suction members 201, 202, 203, 204, and 205 and the first to fourth pusher blocks 301, 302, 303, and 304 in a fourth direction D4 and may extend in the first direction D1. The second side pusher block 450 may face the other side of each of the suction structure 200 and the first to fourth pusher blocks 301, 302, 303, and 304 and may have a bar shape. Here, the third direction D3 and the fourth direction D4 may be substantially opposite directions. A portion of the second side pusher block 450 may protrude from the lower surface of the body 110, and a remaining portion of the second side pusher block 450 may be positioned inside the body 110. In other words, a fourth opening may be formed on the lower surface of the body 110, and the portion of the second side pusher block 450 may protrude from the lower surface of the body 110 through the fourth opening. In addition, a size (e.g., a diameter) of the remaining portion of the second side pusher block 450 may be greater than a size (e.g., a diameter) of the portion of the second side pusher block 450. In other words, the size of the portion of the second side pusher block 450 may be substantially the same as a size (e.g., a diameter) of the fourth opening, and the size of the remaining portion of the second side pusher block 450 may be greater than the size of the fourth opening. Thus, since the size of the remaining portion of the second side pusher block 450 positioned inside the body 110 is greater than the size of the fourth opening, separation of the second side pusher block 450 from the body 110 may be prevented.

In exemplary embodiments, the first side pusher block 430 and the second side pusher block 450 may be substantially parallel to each other, and the suction structure 200 and the first to fourth pusher blocks 301, 302, 303, and 304 may be positioned between the first and second side pusher blocks 430 and 450. In addition, a length where each of the first and second side pusher blocks 430 and 450 protrudes from the lower surface of the body 110 is defined as the second length h2, and the length (i.e., the second length h2) where each of the first and second side pusher blocks 430 and 450 protrudes from the lower surface of the body 110 and the length (i.e., the second length h2) where each of the first to fourth pusher blocks 301, 302, 303, and 304 protrudes from the lower surface of the body 110 may be substantially the same.

For example, as illustrated in FIG. 1, in a storage 410 in which the tubes 10 are arranged, the tubes 10 may be arranged along a column direction (e.g., the first direction D1 or a sixth direction D6) and a row direction (e.g., the third direction D3 or the fourth direction D4). Here, the first to fifth suction members 201, 202, 203, 204, and 205 and the first to fourth pusher blocks 301, 302, 303, and 304 may correspond to tubes 10 positioned in the same column among the tubes 10, and the first and second side pusher blocks 430 and 450 may correspond to tubes 10 positioned in columns adjacent to the tubes 10 corresponding to the first to fifth suction members 201, 202, 203, 204, and 205 and the first to fourth pusher blocks 301, 302, 303, and 304 among the tubes 10.

That is, in a storage 410 in which the tubes 10 are arranged, when the tubes 10 positioned in the same column are in contact with the first to fifth suction members 201, 202, 203, 204, and 205 and the first to fourth pusher blocks 301, 302, 303, and 304, each of the first to fourth pusher blocks 301, 302, 303, and 304 may provide elastic force to each of the remaining tubes 10 except for the tubes 10 contacted with the first to fifth suction members 201, 202, 203, 204, and 205 among the tubes 10 positioned in the same column, and the first and second side pusher blocks 430 and 450 may provide elastic force to each of the tubes 10 positioned in the adjacent columns.

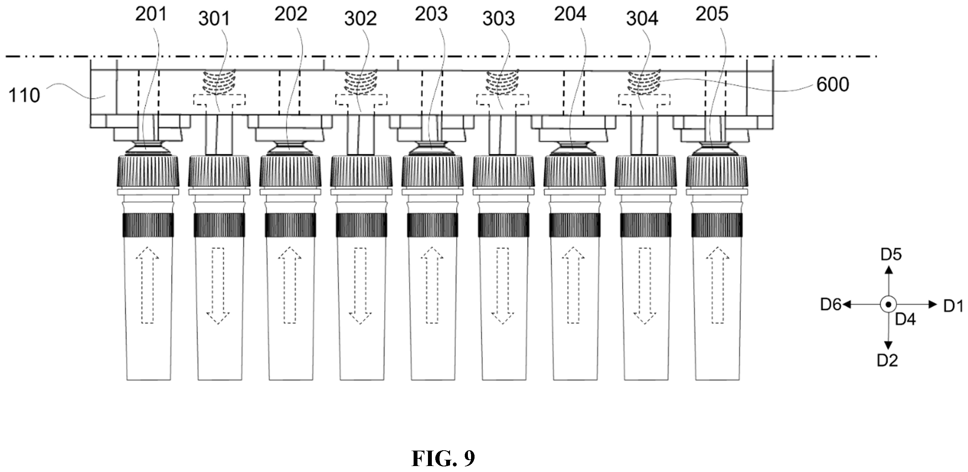

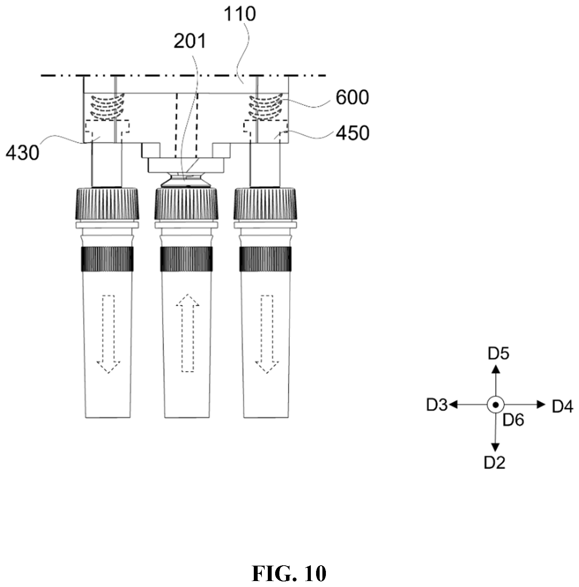

In other words, the first to fifth suction members 201, 202, 203, 204, and 205 and the first to fourth pusher blocks 301, 302, 303, and 304 may be in contact with tubes 10 positioned in the same column among the tubes 10, and the first and second side pusher blocks 430 and 450 may be in contact with tubes 10 positioned in columns adjacent to the tubes 10 corresponding to the first to fifth suction members 201, 202, 203, 204, and 205 and the first to fourth pusher blocks 301, 302, 303, and 304 among the tubes 10. In this case, since the second length h2 is greater than the first length h1, each of the first to fourth pusher blocks 301, 302, 303, and 304 and the first and second side pusher blocks 430 and 450 may move in a direction from the tube 10 toward the body 110, and the elastic members 600 positioned on the first and second side pusher blocks 430 and 450 may be compressed. As a result, each of the first to fourth pusher blocks 301, 302, 303, and 304 and the first and second side pusher blocks 430 and 450 may provide elastic force in a direction from the body 110 toward the tube 10 to each of the tubes 10 contacted with each of the first to fourth pusher blocks 301, 302, 303, and 304 and the first and second side pusher blocks 430 and 450. In particular, due to movement of each of the first to fourth pusher blocks 301, 302, 303, and 304 and the first and second side pusher blocks 430 and 450 in the fifth direction D5, elastic force (or restoring force) that attempts to return the elastic member 600 from a compressed state (refer to FIGS. 9 and 10) to an original state (refer to FIGS. 6 and 7) may be generated. Since the first to fourth pusher blocks 301, 302, 303, and 304 and the first and second side pusher blocks 430 and 450 are in contact with the elastic member 600, the elastic force may be provided to the tubes 10 contacted with the first to fourth pusher blocks 301, 302, 303, and 304 and the first and second side pusher blocks 430 and 450 through the first to fourth pusher blocks 301, 302, 303, and 304 and the first and second side pusher blocks 430 and 450. Thus, when the tube transferring device 100 ascends in the fifth direction D5 together with the tubes 10 contacted with the suction structure 200 while maintaining a state where air is sucked through the suction structure 200, the tubes 10 contacted with the first to fourth pusher blocks 301, 302, 303, and 304 and the first and second side pusher blocks 430 and 450 are not lifted together with the tubes 10 contacted with the suction structure 200 due to the provided elastic force, and the tubes 10 contacted with the first to fourth pusher blocks 301, 302, 303, and 304 and the first and second side pusher blocks 430 and 450 may remain in the storage 410.

Referring again to FIGS. 1, 2, and 8, the gripper 500 may grip or release the tubes 10 that are in contact with the first to fifth suction members 201, 202, 203, 204, and 205.

The first gripper 510 may be positioned at one side of the fix member 130 and may be hingedly connected to the first pivot shaft 515 extending in the first direction D1. A first end of the first gripper 510 may be adjacent to the first pivot shaft 515. In addition, a second end of the first gripper 510 may extend in the first direction D1, and the second end of the first gripper 510 may include a number of first recesses 530 equal to the number (e.g., five) of the first to fifth suction members 201, 202, 203, 204, and 205.

The second gripper 520 may be positioned at the other side of the fix member 130 and may be hingedly connected to the second pivot shaft 525 extending in the first direction D1. A first end of the second gripper 520 may be adjacent to the second pivot shaft 525. In addition, a second end of the second gripper 520 may extend in the first direction D1, and the second end of the second gripper 520 may include a number of second recesses 540 equal to the number (e.g., five) of the first to fifth suction members 201, 202, 203, 204, and 205.

In exemplary embodiments, to release tubes 10 that are in contact with the first to fifth suction members 201, 202, 203, 204, and 205, the first and second grippers 510 and 520 may be positioned to be substantially parallel to the lower surface of the body 110 via the first and second pivot shafts 515 and 525. In addition, to grip the tubes 10 that are in contact with the first to fifth suction members 201, 202, 203, 204, and 205, the second end of each of the first and second grippers 510 and 520 may be positioned adjacent to each other. Here, when the second end of each of the first and second grippers 510 and 520 is positioned adjacent to each other, the tubes 10 may be positioned within the first and second recesses 530 and 540, and, as illustrated in FIG. 2B, the first and second recesses 530 and 540 may be formed along an outer profile of the container 22.

The suction structure 200, the elastic structure 300, and the gripper 500 may be manufactured by using metal, alloy, metal nitride, plastic, etc.

FIGS. 9 and 10 are diagrams for describing a state where the suction structure and the elastic structure of FIGS. 6 and 7 are in contact with tubes arranged in a storage. For example, an arrow illustrated in FIGS. 9 and 10 may indicate a direction where a force acts on the tubes 10.

Referring to FIGS. 1, 9, and 10, in order to transfer tubes 10 positioned at predetermined positions of a predetermined column in the storage 410 in which the tubes 10 are arranged along the row and column directions, when an upper surface of each of the tubes 10 positioned at the predetermined positions is in contact with a lower surface of each of the first to fifth suction members 201, 202, 203, 204, and 205, each of the first to fourth pusher blocks 301, 302, 303, and 304 that is in contact with remaining tubes 10 except for the tubes 10 contacted with the first to fifth suction members 201, 202, 203, 204, and 205 in the predetermined column may move in the fifth direction D5, and the elastic member 600 positioned on each of the first to fourth pusher blocks 301, 302, 303, and 304 may be compressed.

In addition, in the storage 410 in which the tubes 10 are arranged along the row and column directions, in order to transfer the tubes 10 positioned at predetermined positions of the predetermined column, when an upper surface of each of the tubes 10 positioned at the predetermined positions is in contact with a lower surface of each of the first to fifth suction members 201, 202, 203, 204, and 205, each of the first and second side pusher blocks 430 and 450 that is in contact with the tubes 10 positioned in a column adjacent to the predetermined column may move in the fifth direction D5, and the elastic members 600 positioned on each of the first and second side pusher blocks 430 and 450 may be compressed. After the elastic members 600 positioned on each of the first to fourth pusher blocks 301, 302, 303, and 304 and the first and second side pusher blocks 430 and 450 are compressed, air may be sucked through the first to fifth suction members 201, 202, 203, 204, and 205. In this case, a force may act in the fifth direction D5 on the tubes 10 contacted with the first to fifth suction members 201, 202, 203, 204, and 205 due to a suction force of the suction structure 200, and a force may act in the second direction D2 on the tubes 10 contacted with the first to fourth pusher blocks 301, 302, 303, and 304 and the first and second side pusher blocks 430 and 450 due to elastic force of the elastic members 600.

However, although the suction structure 200 has been described as including five suction members and the elastic structure 300 has been described as including four pusher blocks, the configuration of the present invention is not limited thereto. For example, in other exemplary embodiments, the suction structure 200 may include first to n-th suction members, where n is an integer of 3 or more, arranged along the first direction D1, and the elastic structure 300 may include first to m-th pusher blocks, where m is an integer of 2 or more, arranged along the first direction D1. A j-th pusher block, where j is an integer between 1 and m, among the first to m-th pusher blocks may be positioned between k-th and (k+1)-th suction members, where k is an integer between 1 and n, among the first to n-th suction members, and a (j+1)-th pusher block may be positioned between the (k+1)-th suction member and a (k+2)-th suction member. In addition, the elastic structure 300 may further include first and second side pusher blocks that extend along the first direction D1 in both lateral portions of the first to n-th suction members and the first to m-th pusher blocks and face each other. Further, the tubes 10 may be arranged in A rows and B columns in the storage 410, where A and B are integers of 3 or more, and when the first to n-th suction members are in contact with the tubes 10 positioned in a g-th column, where g is an integer between 1 and A, the first to m-th pusher blocks may provide elastic force to each of tubes 10, which are not in contact with the first to n-th suction members, among the tubes 10 positioned in the g-th column. The first side pusher block may provide elastic force to each of the tubes 10 positioned in a (g-1)-th column, and the second side pusher block may provide elastic force to each of the tubes 10 positioned in a (g+1)-th column.

In addition, although the first to fifth suction members 201, 202, 203, 204, and 205 and the first to fourth pusher blocks 301, 302, 303, and 304 have been described as being alternately arranged in the first direction D1 in the present invention, the configuration of the present invention is not limited thereto. For example, in other exemplary embodiments, at least two pusher blocks may be positioned along the first direction D1 between two adjacent suction members among the first to fifth suction members 201, 202, 203, 204, and 205, or the first to fifth suction members 201, 202, 203, 204, and 205 and the first to fourth pusher blocks 301, 302, 303, and 304 may be irregularly arranged along the first direction D1.

In a conventional tube transferring device, after the conventional tube transferring device contacts suction members with tubes 10 positioned in odd-numbered rows of a first column of a storage 410 in order to transfer the tubes 10 positioned in the odd-numbered rows of the first column of the storage 410, and then in a step of lifting the tubes 10 positioned in the odd-numbered rows of the first column of the storage 410 by sucking air, tubes 10 positioned adjacent to the tubes 10 positioned in the odd-numbered rows of the first column of the storage 410 may be lifted together with the tubes 10 positioned in the odd-numbered rows of the first column of the storage 410 due to burrs 15. In this case, the tube 10 lifted together may be lost while the conventional tube transferring device is moved, or the tube 10 lifted together may be lost during a step where the conventional tube transferring device releases (or discharges) the tubes 10 to a designated space.

As the tube transferring device 100 according to example embodiments of the present invention includes the elastic structure 300 (e.g., the first to fourth pusher blocks 301, 302, 303, and 304 and the first and second side pusher blocks 430 and 450), during a step of lifting the tubes 10 positioned at predetermined positions by the tube transferring device 100, tubes 10 positioned adjacent to the tubes 10 at the predetermined positions may not be lifted together with the tubes 10 at the predetermined positions, even when burrs 15 are formed on the tube 10. Accordingly, since the tube transferring device 100 accurately transfers only the tubes 10 positioned at the predetermined positions, loss of the tube 10 may be prevented.

In addition, since the tubes 10 positioned adjacent to the tubes 10 at the predetermined positions are not lifted together with the tubes 10 at the predetermined positions, the gripper 500 grips only the tubes 10 positioned at the predetermined positions, such that malfunction of the gripper 500 may not occur.

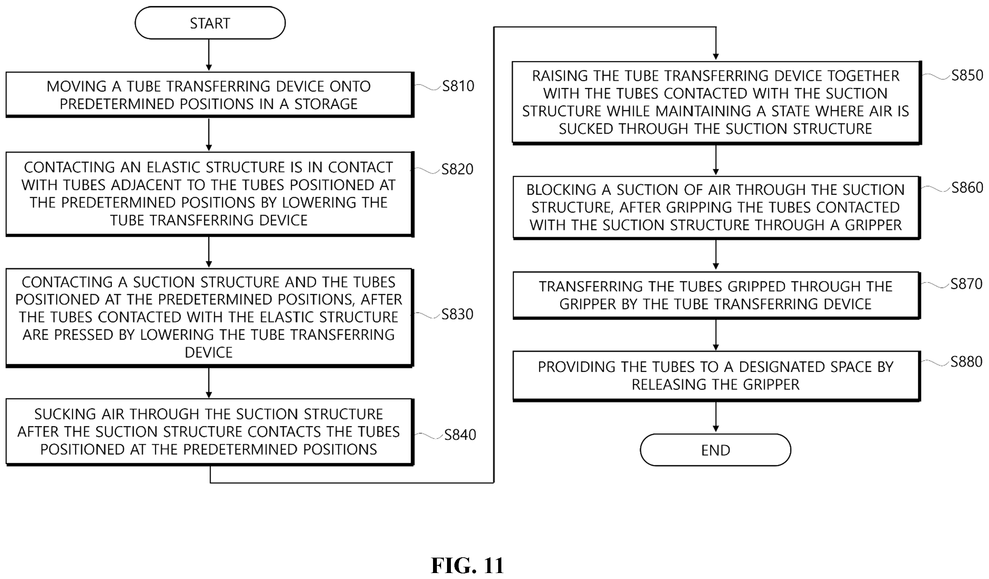

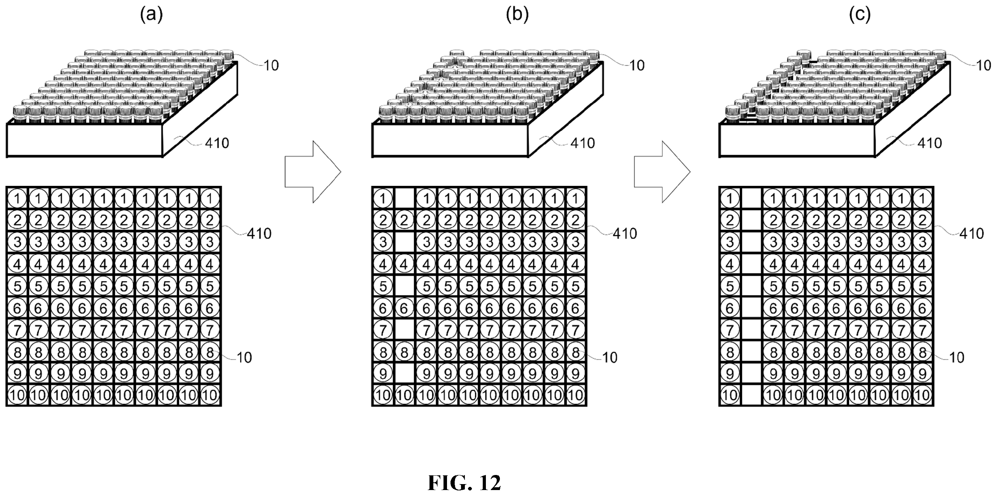

FIG. 11 is a flow chart illustrating a method of transferring a tube of a tube transferring device according to exemplary embodiments of the present invention, and FIG. 12 is a diagram for describing the method of transferring the tube of the tube transferring device of FIG. 11. For example, FIG. 12 is a diagram for describing a transferring order of the tubes arranged in the storage by the tube transferring device.

Referring to FIGS. 11 and 12, a method of transferring a tube of a tube transferring device 100 may include a step S810 of moving a tube transferring device 100 onto predetermined positions in a storage 410, a step S820 of contacting an elastic structure 300 and tubes 10 adjacent to the tubes 10 positioned at the predetermined positions by lowering the tube transferring device 100, a step S830 of contacting a suction structure 200 and the tubes 10 positioned at the predetermined positions, after the tubes 10 contacted with the elastic structure 300 are pressed by lowering the tube transferring device 100, a step S840 of sucking air through the suction structure 200 after the suction structure 200 contacts the tubes 10 positioned at the predetermined positions, a step S850 of raising the tube transferring device 100 together with the tubes 10 contacted with the suction structure 200 while maintaining a state where air is sucked through the suction structure 200, a step S860 of blocking a suction of air through the suction structure 200, after gripping the tubes 10 contacted with the suction structure 200 by a gripper 500, a step S870 of transferring the tubes 10 gripped through the gripper 500 by the tube transferring device 100, and a step S880 of providing the tubes 10 to a designated space by releasing the gripper 500.

Referring again to FIGS. 1A, 11, and 12A, the tube transferring device 100 may move onto the predetermined positions in the storage 410, and as the tube transferring device 100 is lowered, the elastic structure 300 may be in contact with tubes 10 positioned adjacent to the tubes 10 positioned at the predetermined positions. Here, the predetermined positions may be positions corresponding to first, third, fifth, seventh, and ninth rows in a second column of the storage 410. In addition, the first to fourth pusher blocks 301, 302, 303, 304 of the elastic structure 300 may contact tubes 10 positioned at second, fourth, sixth, and eighth rows of the second column in the storage 410, and the first and second side pusher blocks 430, 450 of the elastic structure 300 may contact tubes 10 positioned at first and third columns in the storage 410. For example, the first pusher block 301 may contact the tube 10 positioned at the second row of the second column in the storage 410, the second pusher block 302 may contact the tube 10 positioned at the fourth row of the second column in the storage 410, the third pusher block 303 may contact the tube 10 positioned at the sixth row of the second column in the storage 410, and the fourth pusher block 304 may contact the tube 10 positioned at the eighth row of the second column in the storage 410.

Referring again to FIGS. 9, 10, 11, and 12A, after the elastic structure 300 contacts tubes 10 positioned adjacent to the tubes 10 positioned at the predetermined positions, the tube transferring device 100 may be lowered so that the suction structure 200 contacts the tubes 10 positioned at the predetermined positions. During this step, the tubes 10 contacted with the elastic structure 300 may be pressed in the second direction D2. For example, while the tube transferring device 100 is lowered to bring the suction structure 200 into contact with the tubes 10 positioned at the predetermined positions, each of the first to fourth pusher blocks 301, 302, 303, and 304 and the first and second side pusher blocks 430 and 450 may move in the fifth direction D5, and the elastic member 600 positioned on each of the first to fourth pusher blocks 301, 302, 303, and 304 and the first and second side pusher blocks 430 and 450 may be compressed. As a result, each of the first to fourth pusher blocks 301, 302, 303, and 304 and the first and second side pusher blocks 430 and 450 may provide elastic force in the second direction D2 to each of the tubes 10 contacted with each of the first to fourth pusher blocks 301, 302, 303, and 304 and the first and second side pusher blocks 430 and 450, and the tubes 10 contacted with each of the first to fourth pusher blocks 301, 302, 303, and 304 and the first and second side pusher blocks 430 and 450 may be pressed by a force corresponding to the elastic force.

After each of the first to fourth pusher blocks 301, 302, 303, and 304 and the first and second side pusher blocks 430 and 450 moves in the fifth direction D5 by a distance obtained by subtracting a first length h1 from a second length h2 (refer to FIGS. 6 and 7), the suction structure 200 may be in contact with the tubes 10 positioned at the predetermined positions. Here, the suction structure 200 may be in contact with the tubes 10 positioned at the first, third, fifth, seventh, and ninth rows of the second column in the storage 410. For example, the first suction member 201 may be in contact with the tube 10 positioned at the first row of the second column in the storage 410, and the second suction member 202 may be in contact with the tube 10 positioned at the third row of the second column in the storage 410. The third suction member 203 may be in contact with the tube 10 positioned at the fifth row of the second column in the storage 410, and the fourth suction member 204 may be in contact with the tube 10 positioned at the seventh row of the second column in the storage 410. The fifth suction member 205 may be in contact with the tube 10 positioned at the ninth row of the second column in the storage 410.

After the suction structure 200 is in contact with the tubes 10 positioned at the predetermined positions, air may be sucked through the suction structure 200. During this process, the tubes 10 contacted with the suction structure 200 may be pressed in the fifth direction D5, and the tubes 10 contacted with the suction structure 200 may maintain contact with the suction structure 200.

Referring again to FIGS. 1B, 11, and 12B, while a state where air is sucked through the suction structure 200 is maintained, the tube transferring device 100 may be lifted (e.g., moved in the fifth direction D5) together with the tubes 10 contacted with the suction structure 200. Here, while the tube transferring device 100 together with the contacted tubes 10 moves in the fifth direction D5 by a distance obtained by subtracting the first length h1 from the second length h2, the first to fourth pusher blocks 301, 302, 303, and 304 and the first and second side pusher blocks 430 and 450 may press the tubes 10 contacted with the first to fourth pusher blocks 301, 302, 303, and 304 and the first and second side pusher blocks 430 and 450. That is, when the tube transferring device 100 is lifted together with the tubes 10 contacted with the suction structure 200, the tubes 10 contacted with the first to fourth pusher blocks 301, 302, 303, and 304 and the first and second side pusher blocks 430 and 450 may be left in the storage 410 by the applied pressing force, and the first, third, fifth, seventh, and ninth rows of the second column in the storage 410 may be empty spaces.

Referring again to FIGS. 2B, 11, and 12B, after the tubes 10 contacted with the suction structure 200 are gripped through the gripper 500, suction of air through the suction structure 200 may be blocked. In this case, the tubes 10 that had contacted the suction structure 200 may be separated from the suction structure 200.

After suction of air through the suction structure 200 is blocked, the tube transferring device 100 may transfer the tubes 10 gripped through the gripper 500, and the gripper 500 may be released to provide the tubes 10 to a designated space.

Referring again to FIGS. 1A, 11, and 12B, after the tube transferring device 100 provides the tubes 10 to the designated space, the tube transferring device 100 may move onto predetermined positions in the storage 410, and as the tube transferring device 100 is lowered, the first and second side pusher blocks 430 and 450 of the elastic structure 300 may be in contact with tubes 10 adjacent to the tubes 10 positioned at the predetermined positions. Here, the predetermined positions may be positions corresponding to second, fourth, sixth, eighth, and tenth rows of the second column in the storage 410. In addition, the first to fourth pusher blocks 301, 302, 303, and 304 of the elastic structure 300 may be positioned at third, fifth, seventh, and ninth rows of the second column in the storage 410, and the first and second side pusher blocks 430 and 450 of the elastic structure 300 may be in contact with tubes 10 positioned at first and second columns of the storage 410.

Referring again to FIGS. 9, 10, 11, and 12B, after the first and second side pusher blocks 430 and 450 contact tubes 10 adjacent to the tubes 10 positioned at the predetermined positions, the tube transferring device 100 may be lowered so that the suction structure 200 is in contact with the tubes 10 positioned at the predetermined positions. During this step, the tubes 10 contacted with the first and second side pusher blocks 430 and 450 may be pressed in the second direction D2. For example, while the tube transferring device 100 is lowered to bring the suction structure 200 into contact with the tubes 10 positioned at the predetermined positions, each of the first and second side pusher blocks 430 and 450 may move in the fifth direction D5, and the elastic members 600 positioned on each of the first and second side pusher blocks 430 and 450 may be compressed. As a result, each of the first and second side pusher blocks 430 and 450 may provide elastic force in the second direction D2 to each of the tubes 10 contacted with each of the first and second side pusher blocks 430 and 450, and the tubes 10 contacted with each of the first and second side pusher blocks 430 and 450 may be pressed by a force corresponding to the elastic force.

After each of the first and second side pusher blocks 430 and 450 moves in the fifth direction D5 by a distance obtained by subtracting the first length h1 from the second length h2 (refer to FIGS. 6 and 7), the suction structure 200 may be in contact with the tubes 10 positioned at the predetermined positions. Here, the suction structure 200 may be in contact with the tubes 10 positioned in the second, fourth, sixth, eighth, and tenth rows of the second column in the storage 410. For example, the first suction member 201 may be in contact with the tube 10 positioned at the second row of the second column in the storage 410, and the second suction member 202 may be in contact with the tube 10 positioned at the fourth row of the second column in the storage 410. The third suction member 203 may be in contact with the tube 10 positioned at the sixth row of the second column in the storage 410, and the fourth suction member 204 may be in contact with the tube 10 positioned at the eighth row of the second column in the storage 410. The fifth suction member 205 may be in contact with the tube 10 positioned in the tenth row of the second column in the storage 410.

After the suction structure 200 is in contact with the tubes 10 positioned at the predetermined positions, air may be sucked through the suction structure 200. During this step, the tubes 10 contacted with the suction structure 200 may be pressed in the fifth direction D5, and the tubes 10 contacted with the suction structure 200 may maintain contact with the suction structure 200.

Referring again to FIGS. 1B, 11, and 12C, while a state where air is sucked through the suction structure 200 is maintained, the tube transferring device 100 may be lifted together with the tubes 10 contacted with the suction structure 200. Here, while the tube transferring device 100 moves in the fifth direction D5 by a distance obtained by subtracting the first length h1 from the second length h2 together with the contacted tubes 10, the first to fourth pusher blocks 301, 302, 303, and 304 and the first and second side pusher blocks 430 and 450 may press the tubes 10 contacted with the first to fourth pusher blocks 301, 302, 303, and 304 and the first and second side pusher blocks 430 and 450. That is, when the tube transferring device 100 is lifted together with the tubes 10 contacted with the suction structure 200, the tubes 10 contacted with the first to fourth pusher blocks 301, 302, 303, and 304 and the first and second side pusher blocks 430 and 450 may remain in the storage 410, and the second, fourth, sixth, eighth, and tenth rows of the second column in the storage 410 may be empty spaces.

Referring again to FIGS. 2B, 11, and 12C after the tubes 10 contacted with the suction structure 200 are gripped through the gripper 500, suction of air through the suction structure 200 may be blocked. In this case, the tubes 10 that were in contact with the suction structure 200 may be separated from the suction structure 200.

After suction of air through the suction structure 200 is blocked, the tube transferring device 100 may transfer the tubes 10 gripped through the gripper 500, and the gripper 500 may be released to provide the tubes 10 to a designated space.

In this manner, the tube transferring device 100 may transfer all of the tubes 10 arranged in the storage 410 to the designated space.

However, for convenience of description, the tube transferring device 100 has been described as transferring the tubes 10 arranged in the second column of the storage 410, but the method of the present invention is not limited thereto. For example, the tube transferring device 100 may initially transfer the tubes 10 arranged in the first column of the storage 410, or may initially transfer the tubes 10 arranged in a predetermined column.

In addition, it has been described in the present invention that, after suction of air through the suction structure 200 is blocked, the tube transferring device 100 transfers the tubes 10 gripped through the gripper 500, but the method of the present invention is not limited thereto. For example, after the tube transferring device 100 transfers the tubes 10 gripped through the gripper 500, suction of air through the suction structure 200 may be blocked. That is, the tube transferring device 100 may transfer the tubes 10 gripped through the gripper 500 while suction of air through the suction structure 200 is maintained.

As described above, although the present invention has been described with reference to exemplary embodiments, those of ordinary skill in the art will understand that the present invention may be variously modified and changed without departing from the spirit and scope of the present invention as set forth in the following claims.

### INDUSTRIAL APPLICABILITY

The present invention may be applied to tube transferring devices capable of transferring tubes. For example, it may be applied to tube transferring devices transferring tubes positioned in predetermined positions from the storage where the tubes are arranged, etc.

### <Explanation of symbols>

| | | | |
|---|---|---|---|
| 10: | tube | 15: | burr |
| 22: | container | 25: | protrusion |
| 27: | cap | 100: | tube transferring device |
| 110: | body | 130: | fix member |
| 200: | suction structure | 300: | elastic structure |
| 201, 202, 203, 204, 205: | first to fifth suction members | | |
| 301, 302, 303, 304: | first to fourth pusher blocks | | |
| 400: | controller | 410: | storage |
| 430: | first side pusher block | 450: | second side pusher block |
| 500: | gripper | 510: | first gripper |
| 520: | second gripper | 515: | first pivot axis |
| 525: | second pivot axis | 530: | first recess |
| 540: | second recess | 600: | elastic member |

## Claims

1. A tube transferring device for transferring tubes positioned in predetermined positions among a plurality of tubes in a storage where the tubes are arranged, the device comprising:
a body;
a suction structure including suction members positioned on a lower surface of the body, the suction member being configured to maintain contact with an upper surface of the tube by sucking air; and
an elastic structure including pusher blocks protruded from a lower surface of the body, the elastic structure providing elastic force to an upper surface of the tube in a direction from the body to the tube, at least one pusher block being positioned between the suction members on the lower surface of the body.

2. The device of claim 1, wherein the suction members and the pusher blocks are alternately arranged along a first direction.

3. The device of claim 1, wherein a distance between adjacent suction members among the suction members is substantially the same as a distance between adjacent pusher blocks among the pusher blocks.

4. The device of claim 1, wherein when the tubes positioned in the predetermined positions are in contact with the suction members in the storage where the tubes are arranged, each of the pusher blocks provides elastic force to each of the tubes adjacent to the tubes contacted with the suction members, while each of the pusher blocks is in contact with each of the tubes adjacent to the tubes contacted with the suction members.

5. The device of claim 1, wherein a length where each of the pusher blocks is protruded from the lower surface of the body is greater than a length where each of the suction members is protruded from the lower surface of the body.

6. The device of claim 1, wherein the elastic structure further includes:
a first side pusher block extending in a first direction and spaced apart from the suction members and the pusher blocks on the lower surface of the body, the first side pusher block facing one side of each of the suction members and the pusher blocks, the first side pusher block having a bar shape.

7. The device of claim 6, wherein the elastic structure further includes:
a second side pusher block extending in the first direction and spaced apart from the suction members and the pusher blocks on the lower surface of the body, the second side pusher block facing other side of each of the suction members and the pusher blocks, the second side pusher block having a bar shape.

8. The device of claim 7, wherein:
the first side pusher block is in parallel to the second side pusher block,
the suction members and the pusher blocks are positioned between the first and second side pusher blocks, and
a length where each of the pusher blocks is protruded from the lower surface of the body is substantially the same as a length where each of the first and second side pusher blocks is protruded from the lower surface of the body.

9. The device of claim 7, wherein:
the tubes are arranged along column and row directions in the storage where the tubes are arranged,
the suction members and the pusher blocks correspond to tubes positioned in the same column among the tubes, and
the first and second side pusher blocks correspond to tubes positioned at columns adjacent to the tubes corresponding to the suction members and the pusher blocks among the tubes.

10. The device of claim 9, wherein when the tubes positioned in the same column are in contact with the suction members and the pusher blocks in the storage where the tubes are arranged,
each of the pusher blocks provides elastic force to each of remaining tubes except for the tubes contacted with the suction members among the tubes positioned in the same column, and
each of the first and second side pusher blocks provides elastic force to each of the tubes positioned at columns adjacent to the tubes corresponding to the suction members and the pusher blocks among the tubes.

11. The device of claim 1, wherein the suction structure includes first to n-th suction members arranged along a first direction, where n is an integer more than 3,
the elastic structure includes first to m-th pusher blocks arranged along the first direction, where m is an integer more than 2,
a j-th pusher block among the first to m-th pusher blocks is positioned between k-th and (k+1)-th suction members among the first to n-th suction members, where k is an integer between 1 and n, and j is an integer between 1 and m, and
a (j+1)-th pusher block is positioned between (k+1)-th and (k+2)-th suction members.

12. The device of claim 11, wherein the elastic structure further includes:
first and second side pusher blocks extending along the first direction in both lateral portions of the first to n-th suction members and the first to m-th pusher blocks, the first and second side pusher blocks being opposite to each other.

13. The device of claim 12, wherein the tubes in the storage are arranged in A rows and B columns, where each of A and B is integer more than 3,
when the first to n-th suction members are in contact with tubes positioned at a g-column, where g is an integer between 1 and a,
the first to m-th pusher blocks provide elastic force to each of tubes, which is not in contact with the first to n-th suction members, among the tubes positioned at the g-column,
the first side pusher block provides elastic force to each of tubes positioned at a (g-1)-column, and
the second side pusher block provides elastic force to each of tube positioned at a (g+1)-column.

14. The device of claim 1, further comprising:
a gripper gripping or releasing the tube contacted with each of the suction members.

15. The device of claim 14, further comprising:
a fix member positioned on the body, the fix member fixing the body,
wherein the gripper includes:
a first gripper positioned in one side of the fix member, the first gripper being hinge-connected to a first pivot axis extending in a first direction; and
a second gripper positioned in other side of the fix member, the second gripper being hinge-connected to a second pivot axis extending in the first direction.

16. The device of claim 15, wherein a first distal end of the first gripper is adjacent to the first pivot axis, a second distal end of the first gripper extends in the first direction and includes first recessed portions, and a number of the first recessed portions is the same as a number of the suction members, and
wherein a first distal end of the second gripper is adjacent to the second pivot axis, a second distal end of the second gripper extends in the first direction and includes second recessed portions, and a number of the second recessed portions is the same as a number of the suction members.

17. The device of claim 16, wherein the first and second grippers are parallel with respect to the lower surface of the body through the first and second pivot axes so as to release the tubes contacted with the suction members, and the second distal end of each of the first and second grippers is adjacent to each other so as to grip the tubes contacted with the suction members.

18. The device of claim 17, wherein when the second distal end of each of the first and second grippers is adjacent to each other, the tubes are positioned in the first and second recessed portions.

19. The device of claim 14, further comprising:
a controller configured to:
control a suction of air through the suction members, and
control the gripper so that the gripper grips or releases the tubes.

20. A tube transferring device for transferring tubes positioned in predetermined positions among a plurality of tubes in a storage where the tubes are arranged, the device comprising:
a body;
a suction structure including suction members positioned on a lower surface of the body, the suction member being configured to maintain contact with an upper surface of the tube by sucking air;
an elastic structure including pusher blocks protruded from a lower surface of the body and first and second side pusher blocks extending in a first direction by spacing apart from the suction members and the pusher blocks on the lower surface of the body, at least one pusher block being positioned between the suction members on the lower surface of the body, the first and second side pusher blocks being positioned in both lateral portions of each of the suction members and the pusher blocks, the first and second side pusher blocks having a bar shape, the elastic structure providing elastic force to an upper surface of the tube in a direction from the body to the tube;
a gripper gripping or releasing the tube contacted with each of the suction members; and
a controller configured to:
control the suction members so that the suction members suck air or do not suck air, and
control the gripper so that the gripper grips or releases the tubes.

21. A tube transferring device for transferring tubes positioned in predetermined positions among a plurality of tubes in a storage where the tubes are arranged, the device comprising:
a body;
a suction structure including suction members positioned on a lower surface of the body, the suction member being configured to maintain contact with an upper surface of the tube by sucking air; and
a gripper gripping or releasing the tube contacted with each of the suction members.
